# EUROPÄISCHE PATENTANMELDUNG

(11) **EP 2 281 450 A2**
(43) Veröffentlichungstag der Anmeldung: **09.02.2011**
(21) Anmeldenummer: 10007848.4
(22) Anmeldetag: 28.07.2010
(51) Int. Cl.: A01K 3/00

(54) **Wildschutz- und Weldezaun**

(30) Priorität: 28.07.2009 DE 102009035080
(71) Anmelder: AKO-Agrartechnik GmbH & Co. KG, 88239 Wangen-Geiselharz (DE)
(72) Erfinder: Öxle, Markus, 88279 Amtzell (DE)
(74) Vertreter: Roth, Klaus

(57) **Zusammenfassung**

Die vorliegende Erfindung betrifft einen Wildschutz- und Weidezaun (1), netzartig und elektrifiziert, insbesondere einen Schwarzwild-Schutzzaun. Dieser zeichnet sich in einem ersten Aspekt dadurch aus, dass zwischen der Zaununterkante (8) und einer dem Boden (9) entsprechenden Bezugslinie ein Freihalteabstand (10) vorgesehen ist.

In einem zweiten Aspekt zeichnet sich dieser Zaun dadurch aus, dass vorzugsweise in seinem oberen Bereich ein optisches Warnelement (11,12,13) vorgesehen ist.

Entsprechend eines dritten Aspektes betrifft die Erfindung einen Zaunpfosten (3) für einen solchen Wildschutz- und Weidezaun (1) und bezüglich eines vierten Aspektes einen Zaunaufsatz (25).

## Beschreibung

Die vorliegende Erfindung betrifft einen Wildschutz- und Weidezaun entsprechend der Ansprüche 1 und 2, sowie einen Zaunpfosten für derartige Zäune entsprechend des Anspruchs 21.

### Stand der Technik

Ein Wildschutzzaun ist beispielsweise aus der DE 10 2005 030 506 B3 bekannt. Er umfasst am Boden zu verankernde Leitprofile in der Form abgekanteter Stahlbleche. Diese bilden eine der Blechbreite entsprechend hohe und für jegliches Getier unpassierbare Leitwand aus.

Im Weiteren dient diese Leitwand als Basis für darauf montierbare Zaunpfosten, die ihrerseits wiederum als Befestigungselemente für Knotengeflechte, Drahtgewebe oder Gitterelemente vorgesehen sind.

Ein aus einem Maschengittergeflecht gefertigter, zwischen Altbäumen zur Befestigung empfohlener Wildzaun ist aus der DE 1 198 524 bekannt.

Die GB 1 110 793 offenbart ein beispielsweise als Schafzaun zu verwendendes, elektrifizierbares Zaunnetz. Zur Eliminierung von Erdungsverlusten wird darin empfohlen, das unterste Netzlängselement entweder nicht zu elektrifizieren oder gleich zu polen, wie den Boden, also zu erden.

### Aufgabe und Vorteile der Erfindung

Der vorliegenden Erfindung liegt die Aufgabe zugrunde, einen gegenüber dem einleitend dargelegten Stand der Technik verbesserten Wildschutz- und Weidezaun vorzuschlagen.

Gelöst wird diese Aufgabe ausgehend von den Oberbegriffen der Ansprüche 1, 2, 3, 22, 23 und 27 durch deren kennzeichnende Merkmale. In den Unteransprüchen sind vorteilhafte und zweckmäßige Weiterbildungen angegeben.

Dementsprechend betrifft die vorliegende Erfindung einen Wildschutz- und Weidezaun, der netzartig und elektrifizierbar ausgebildet ist und insbesondere als Schwarzwild-Schutzzaun verwendet werden kann.

Entsprechend eines ersten Aspektes der Erfindung zeichnet sich dieser Wildschutz- und Weidezaun dadurch aus, dass ein Freihalteabstand zwischen der Zaununterkante und einer dem Boden entsprechenden Bezugslinie vorgesehen ist. Ein solcher Freihalteabstand sichert einerseits den zuverlässigen Betrieb der elektrischen Komponenten des Zauns, dadurch, dass er Widerstandsverringerungen und Kurzschlüsse zwischen komplementären Polen, wie sie beispielsweise durch Bewuchsberührungen hervorgerufen werden, verhindert. Selbst bei starkem wind, der das Netz auch in Richtung des Bodens und damit gegen das unter den Zaun wachsende Gras, Gebüsch und/oder dergleichen mehr drücken kann, kann damit ein im Wesentlichen ungestörter Betrieb der elektrischen Zaunkomponenten und damit dessen zuverlässige Schutzwirkung aufrechterhalten werden. Dies deshalb, da vor dem Aufstellen solcher Wildschutz- und Weidezäune üblicherweise der Boden von Bewuchs, wie Gras, Sträuchern und dergleichen, befreit wird, um dadurch optimale Betriebsbedingungen vorzubereiten.

Andererseits bewirkt der erfindungsgemäße Freihalteabstand den Vorteile dass nachwachsender Bewuchs unterhalb des Zauns problemlos abgemäht oder anderweitig entfernt werden kann und zwar in besonders vorteilhafter Weise sogar während des Betriebs der elektrischen Zaunkomponenten, falls erforderlich. Ein weiterer Vorteil der Bodenfreiheit ist, dass Kleintiere, wie z.B. Igel, ungehindert das Netz passieren können.

In einem zweiten Aspekt zeichnet sich der erfindungsgemäße Wildschutz- und Weidezaun dadurch aus, dass er insbesondere in seinem oberen Bereich ein optisches Warnelement aufweist. Grundsätzlich können die optischen Warnelemente jedoch auch über die gesamte Netzhöhe angebracht sein, also oben, mittig, unten. Hierdurch können insbesondere höherwüchsige Tiere, wie zum Beispiel Weidetiere, Rotwild und insbesondere Schwarzwild schon aus größerem Abstand auf den Zaun aufmerksam gemacht und insbesondere das Wild von einer weiteren Annäherung an diesen schon frühzeitig abgehalten werden. Im Weiteren kann das optische Warnelement zusätzlich auch elektrifiziert werden.

Entsprechend eines dritten Aspektes zeichnet sich der einleitend beschriebene Wildschutz- und Weidezaun dadurch aus, dass ein Zaunpfosten-Aufsatzelement vorgesehen ist. Durch das Vorsehen solcher Zaunpfosten-Aufsatzelementekann in vorteilhafter Weise im Bedarfsfall die Höhe des Wildschutz-und Weidezauns durch Anbringen, insbesondere Aufsetzen eines zusätzlichen Zaunelementes, vergrößert und damit dessen Schutzwirkung zusätzlich verbessert werden. Insbesondere ist es hierdurch möglich, ein Überspringen des Zaunes durch Nutz- und/oder wildtiere zu verhindern.

Das Zaunpfasten-Aufsatzelement kann entweder zur Verbindung eines Zaunpfostens mit einem zusätzlich anzubringenden weiteren Pfostenelement zur Verlängerung des ursprünglichen Pfostens dienen. In einer anderen Ausführungsform ist es aber auch möglich, dass das Zaunpfosten-Aufsatzelement selbst so lang ausgebildet ist, dass zusätzlich zu bereits am Grundzaun ausgebildeten Zaunlängselementen, wie z.B. Drähte, insbesondere Bänder, mindestens ein weiteres solches, vorzugsweise auch mehrere solche Zaunlängselemente oberhalb des Grundzauns und übereinander angeordnet werden können.

In besonders bevorzugter Weise ist zumindest eines dieser Zaunlängselemente oder Netzlängselemente elektrifizierbar ausgebildet und mit einem optischen Warnsignal versehen und/oder bildet ein solches optisches Warnsignal aus. Durch die im Vergleich zum Grundzaun erhöhte Positionierung kann eine zusätzlich bessere Wahrnehmung und damit Hütewirkung erzielt werden.

Die Verbindung des Zaunpfosten-Aufsatzelementes mit dem Zaunpfosten und/oder dem darauf aufzusetzenden Pfosten kann in einer einfachen aber wirkungsvollen Ausführungsform durch einfaches Aufstecken realisiert werden, gegebenenfalls mit einem zusätzlich vorgesehenen Positionshilfeelement, wie z.B. einem Anschlag, beispielsweise in der Form einer Verjüngung in einer Bohrung, einem anderweitig eine Aufnahmeöffnung begrenzenden Element, wie z.B. ein durchgehender Stift, eine Schraube, ein Nagel und/oder dergleichen mehr. Ebenfalls möglich ist die Verbindung an einer Seite zum Pfahl, wiederum vorzugsweise werkzeuglos zu bedienen, wie z.B. Clipselemente oder dergleichen. Denkbar sind aber auch Hebel mit Exzenter, Klemmschellen und dergleichen mehr.

Neben einer möglichen Straßenabgrenzung kann mit einem solche Wildschutz- und Weidezaun in jagd- und landwirtschaftlich vorteilhafter Weise eine Abgrenzung und Sicherung von Ackerflächen erreicht werden.

Zurückkommend auf den Freihalteabstand zwischen der Zaununterkante und dem Boden kann dieser, je nach gewünschtem Anwendungsfall größer oder kleiner vorgesehen werden. Soll der Zaun beispielsweise vorwiegend zum Schutz von Ackerflächen gegen Eindringen von Rotwild, insbesondere aber gegen das Eindringen von Schwarzwild verwendet werden, so kann der Freihalteabstand beispielsweise in einem Bereich von größer etwa 10 cm bis 25 cm vorgesehen werden. Denn, überraschenderweise wurde festgestellt, dass das bekannterweise mit Vorliebe am Boden schnüffelnde Schwarzwild auch dann durch einen elektrischen Weidezaun abgeschreckt wird, wenn dieser nicht bis vollständig an den Boden reicht, wo es dann mit seiner empfindlichsten Stelle, seiner Schnauze, mit diesem in Berührung kommt. Sofern der Zaun zum Hüten von höherwüchsigen Tieren verwendet werden soll, wie z.B. Damwild, kann der Freihalteabstand gegebenenfalls sogar auf eine Größe von im Bereich von 50 cm ausgedehnt werden.

Bei überwiegender Verwendung als Weidezaun und/oder bei gewünschter Rückhaltung auch von niederwüchsigem Wild kann es vorteilhaft sein, wenn der Freihalteabstand größer etwa 5 cm bis 10 cm ist. Beispielsweise können bei der Einzäunung von Schafen diese damit im vergleichsweise zu ihrem mit üblicherweise gut isolierender Wolle bewachsenen Körperbereich empfindlicheren Kopfbereich vom Durchschlüpfen unter dem Zaun abgehalten werden. Insbesondere wirkungsvoll kann dies durch ein elektrifiziertes unteres Netzlängselement bewirkt werden, da der dem Zaun aufgeprägte, elektrische Hüteschock ein Hochheben des Zauns durch sich Darunterschieben durch das Tier auch bei vergleichsweise lose haltbaren Bodenverhältnissen verhindert.

In einer weiter vorteilhaften Ausführungsform ist das Zaunnetz so ausgebildet, dass es mehrere, übereinander angeordnete, wenigstens zum Teil mit elektrischen Leitern versehene und/oder elektrische Leiter ausbildende Netzlängselemente aufweist. Hierdurch kann in vorteilhafter Weise ein großflächiges Rückhalteelement gebildet werden, dessen Durchlassquerschnitt durch Variierung der einzelnen Netzelemente zueinander gezielt auf das damit zurückzuhaltende Wild und/oder Nutzvieh angepasst werden kann. Im unteren Netzbereich kann hierzu beispielsweise ein engmaschigerer Verbund vorgesehen werden, um beispielsweise niederwüchsiges Wild zurückzuhalten und/oder auch um höher gewachsenes Wild vom Durchschlüpfen unter dem Zaun oder vor Hochheben des Zauns durch die damit höhere Hütewirkung unten im Zaunbereich abzuhalten. Im oberen Zaunbereich kann demgegenüber ein großmaschigerer Verbund vorgesehen werden, da an dieser Stelle nur ein Durchschlüpfen des gesamten Tierkörpers durch die jeweilige Zaunmasche verhindert werden muss.

Dementsprechend sind in einer bevorzugten Ausführungsform zwischen den einzelnen Netzlängselementen wenigstens teilweise verschiedene Abstände ausgebildet. Insbesondere vorteilhaft können hierbei entsprechend des oben dargelegten Sachverhalts die Abstände der Netzlängselemente zueinander von unten nach oben zunehmend ausgebildet sein. Eine besonders vorteilhafte Abstandskombination für die Netzlängselemente zueinander liegt hierbei beispielsweise von unten nach oben etwa im Bereich von 1 x 10 cm bis 15 cm, 2 x 15 cm bis 20 cm und 1 x 25 cm bis 30 cm. Grundsätzlich ist aber auch eine im Wesentlichen gleiche Beabstandung wenigstens einzelner Netzlängselemente zueinander möglich, insbesondere auch aller.

Zur Erhöhung der Hütewirkung kann in vorteilhafter Weise das unterste Netzlängselement, einen elektrischen Leiter aufweisen und/oder als ein solcher ausgebildet sein.

Die Polung der einzelnen elektrischen Zaunelemente, insbesondere der Netzlängselemente, kann hierbei mehr oder weniger frei gewählt werden. In einer besonders bevorzugten Ausführungsform wird ein Wechsel in der Polarität der einzelnen, benachbarten elektrischen Zaunkomponenten bevorzugt, wie zum Beispiel +, -, +, ... Das Netz könnte auch als reines "+"-Netz oder "-"-Netz ausgeführt werden bzw. zu einem "+"-Strang oder "-"-Strang verbunden werden.

Die Beaufschlagung des untersten elektrischen Zaunelementes, vorzugsweise handelt es sich hierbei um das unterste Netzlängselement, mit einem Pluspol, hat den Vorteil, dass bei einer Erdung der elektrischen Zaunanlage, also einer Verbindung des Minuspols mit dem Boden, auch bei einer Berührung dieses untersten Zaunelementes ein elektrischer Hüteschock und somit ein Zurückweichen des betreffenden Tieres vom Zaun bewirkt wird. In vorteilhafter Weise kann daher das unterste elektrifizierte Netzlängselement eine von der Erde verschiedene Polung aufweisen.

Besonders bevorzugt kann daher eine elektrisch leitende Verbindung zwischen dem Minuspol (Masse) der elektrischen Zaunanlage und der Erde vorgesehen sein. Um beispielsweise auch bei sehr trockener Witterung und/oder sehr hochohmigen Bodenverhältnissen den Boden entlang und unterhalb des Zauns als Leiter zuverlässig nutzbar machen zu können, kann in weiter bevorzugter Weise eine elektrisch leitende Verbindung zwischen wenigstens einem Netzlängselement und der Erde (Boden) vorgesehen sein, vorzugsweise mehrfach in entsprechenden Abständen.

In den überwiegenden Fällen wird hierbei die Erde mit dem Minuspol verbunden sein. Grundsätzlich realisierbar wäre jedoch bei entsprechend ausgebildeten elektrischen Schaltkomponenten auch eine umgekehrte Polung, bei der der Pluspol mit der Erde verbunden werden kann.

In weiter vorteilhafter Weise kann das Zaunnetz zwischen den Netzlängselementen Druck übertragende Querverbinder aufweisen, um eine Berührung benachbarter Netzlängselemente und damit Störungen in der elektrischen Hütefunktion des Wildschutz- und Weidezauns zu verhindern. In einer besonders bevorzugten Ausführungsform können diese in der Form eines steifen Fadens oder einer steifen Schnur ausgebildet sein, besonders vorteilhaft aus einem nicht elektrisch leitenden Material, wie zum Beispiel Polyethylen. Dadurch können benachbarte Netzlängselemente problemlos mit komplementären Polungen beaufschlagt werden.

Die Abstände zwischen den vertikalen Querverbindern können grundsätzlich frei gewählt werden, abhängig von den mechanischen Einflüssen auf den Zaun kann aber eine vergleichsweise dichte Querverbinderanordnung die Zaunsicherheit bzw. Zaunzuverlässigkeit deutlich erhöhen. In einer bevorzugten Ausführungsform sind daher die Abstände zwischen den Querverbindern in etwa kleiner 150 cm, insbesondere etwa im Bereich von 50 cm vorgesehen. Hierdurch ergeben sich in weiter vorteilhafter Weise, wie bereits oben dargelegt, vergleichsweise kleine freie Durchschlupfquerschnitte durch die so zwischen den Querverbindern und den Netzlängselementen gebildeten Maschen.

Das entsprechend des zweiten Aspektes der vorliegenden Erfindung vorgesehene, optische Warnelement kann in einer ersten bevorzugten Ausführungsform als wenigstens zum Teil farbiges, insbesondere blaues Netzlängselement und/oder als ein auf einem solchen Netzlängselement aufgebrachtes, farbiges, insbesondere blaues Signalelement ausgebildet sein. Die Farbe blau wird von Tieren, insbesondere von Schwarzwild, besonders gut wahrgenommen, so dass hiermit die Schutzwirkung des Wildschutz- und Weidezauns weiter verbessert werden kann.

Das optische Warnelement kann in einer ersten, einfacheren Ausführungsform als passive Lichtquelle, wie z.B. in der Form eines Reflektors ausgebildet sein. Reflektoren sind unabhängig von Energiequellen und auch bei sehr schlechten Lichtverhältnissen vergleichsweise weit sichtbar.

Zur Erhöhung der hierdurch erzielten optischen Warnfunktion des Wildschutz- und Weidezauns kann in einer weiter bevorzugten Ausführungsform das Warnelement auch als aktive Lichtquelle ausgebildet sein, z.B. als LED, insbesondere bevorzugt als blaue LED. Mit entsprechender Elektronik ausgestattet kann eine Speisung dieses aktiven optischen Warnelementes durch die dem Weidezaun aufgeprägte Hütespannung vorgenommen werden, so dass weitere, zusätzliche Energiequellen zu deren Betrieb nicht erforderlich sind.

Eine weitere mögliche Ausführung eines optischen Warnelementes kann durch eine aktive Lichtquelle realisiert werden, die eine eigene Energieversorgung aufweist, z.B. eine Batterie oder einen Akku. Der Leuchtzustand "Ein", "Aus" und/oder gegebenenfalls reduzierte Leuchtstärke kann entweder durch eine interne Schaltung vorgegeben werden und/oder durch Einflussnahme von außen, beispielsweise durch eine Ankopplung an die elektrische Weidezaunschaltung. Diese Ankopplung kann beispielsweise direkt über einen elektrischen Leiter erfolgen, möglich ist aber auch eine beispielsweise kapazitive und/oder induktive Ankopplung. Bezüglich der Blinkfrequenz kann in der ersten Ausführungsform der Hütetakt des Weidezauns herangezogen werden, in einer davon abgewandelten Ausführungsform sind Variierungen möglich, und zwar sowohl für konstante Blinkfrequenzen als auch für unkonstante.

Ein blinkender Betrieb, der gegenüber einem leuchtenden Betriebszustand aufgrund der wechselnden Lichtintensität leichter wahrgenommen wird, kann in besonders vorteilhafter weise einfach durch die gepulste Weidezaunschaltung erreicht werden. Der Betrieb könnte alternativ auch mit einem arhythmischen Impuls ausgeführt werden, damit der Gewöhnungseffekt bei den Tieren nicht so rasch eintreten kann.

Der vierte Aspekt der vorliegenden Erfindung betrifft einen Zaunpfosten für einen netzartigen, elektrifizierten Wildschutz- und Weidezaun, insbesondere für einen Schwarzwild-Schutzzaun, mit Netzhaltern. Ein solcher Zaunpfosten zeichnet sich dadurch aus, dass ein Freihalteabstand zwischen der Position des untersten Netzhalters und einem im aufgestellten Zustand des Zauns dem Boden entsprechenden Bezugspunkt am Zaunpfosten vorgesehen ist. Durch die Position des Netzhalters am Zaunpfosten kann die Höhe des Zauns gegenüber dem Boden festgelegt werden. Der oben dargelegte Sachverhalt bezüglich des Freihalteabstandes zwischen dem untersten Netzlängselement und dem Boden gilt dementsprechend auch hierzu.

Durch das Vorsehen eines Zaunpfosten-Aufsatzelementes für einen Zaunpfosten ist bei Bedarf eine Vergrößerung der Zaunhöhe und damit eine Verbesserung der Hütewirkung des betreffenden Wildschutz- und Weidezauns entsprechend obiger Darlegungen in vorteilhafter Weise möglich.

In einer bevorzugten Ausführungsform kann wenigstens ein unterer, insbesondere der unterste Netzhalter in seiner Position am Zaunpfosten bezüglich des dem Boden entsprechenden Bezugspunktes veränderbar ausgebildet bzw. angebracht sein, insbesondere verschiebbar. Die Verschiebbarkeit hat den Vorteil, dass die Zaunhöhe jederzeit werkzeuglos anpassbar ist.

Zur weiteren Erhöhung des Komforts kann der Zaunpfosten eine Positionierhilfe aufweisen, beispielsweise in der Form von Positionsmarkierungen und/oder Rasterungen oder dergleichen mehr.

Durch die Veränderbarkeit der Position des untersten Netzhalters am Zaunpfosten kann das Zaunnetz in weiter vorteilhafter Weise auch an sich verändernde Hütebedingungen angepasst oder vorübergehend zu Pflegezwecken der Freihalteabstand verändert werden. Beispielsweise kann bei der Zaununterkante nahe kommendem Bewuchs diese durch Hochschieben des Netzhalters angehoben und damit zumindest vorübergehend der zuverlässige Zaunbetrieb aufrechterhalten werden.

Andererseits kann beispielsweise bei geringem Freihalteabstand zur Durchführung von Mäharbeiten ebenfalls ein wenigstens temporäres Anheben der Zaununterkante in entsprechender Weise vorteilhaft sein. Auch hier kann beispielsweise mit einem geeigneten, zum Beispiel isolierten Werkzeug ein Verschieben des Netzhalters während des Hütebetriebs erfolgen, der Bewuchs unter dem Zaun geschnitten und/oder entfernt und anschließend der Zaun wieder in seinen gewünschten Zustand zurückversetzt werden.

In weiter vorteilhafter Weise kann auch ein zweiter und gegebenenfalls weiterer am Zaunpfosten befestigte Netzhalter positionsvariabel ausgebildet sein. Das ganze Netz kann somit in seiner gesamten Höhe verschoben werden. Hierdurch kann ein und derselbe Zaun für verschiedenste Anwendungszwecke mit entsprechend unterschiedlichen Freihalteabständen am jeweiligen Einsatzort immer mit voller Höhenerstreckung des Zaunnetzes montiert werden.

In weiter vorteilhafter Weise kann ein unterer Netzhalter an einem Zaunpfosten-Setzhilfeelement, beispielsweise einem zum Eindrücken in den Boden vorgesehenen, so genannten "Tritt", ausgebildet (integriert) oder an einem solchen angeordnet sein. Insbesondere durch eine kombinierte Funktion erübrigt sich sowohl in finanziell als auch in funktional vorteilhafter Weise das Vorsehen des andernfalls erforderlichen anderen dieser beiden Elemente.

Die Anordnung des Zaunpfosten-Setzhilfeelementes auf der Höhe des Zaunpfostens, bis zu welcher dieser in die Erde gesteckt werden soll, hat demgegenüber den Vorteil, dass die den Zaun setzende Person, ohne lange nachdenken zu müssen, durch Eintreiben des Pfostens bis zum Anschlag durch den Tritt immer gleich die richtige Pfostensetzhöhe realisiert. In diesem Fall wären vorteilhafterweise ein vom Tritt getrennt auszubildender, zumindest jedoch von diesem beabstandeter, unterer Netzhalter am Zaunpfosten anzuordnen. Bei positionsveränderlicher Anordnung können die oben dargelegten Vorteile bezüglich der Variierung des Freihalteabstandes weiter erzielt werden.

Das Vorsehen einer zweiten Befestigungsspitze für den Zaunpfahl kann beispielsweise an der Unterseite eines solchen Trittes realisiert werden und zur Erhöhung der Pfahlstabilität und damit der Stabilität des gesamten Zaunes dienen.

In einer weiter bevorzugten Ausführungsform ist der Zaunpfosten aus Glasfaser, insbesondere aus Fiberglas gebildet. Hierdurch kann eine besonders hohe Stabilität des Zaunes erreicht werden, die sowohl starkem Winddruck als auch gegebenenfalls vorkommenden Durchbruchversuchen die Funktionalität des Wildschutz- und Weidezauns aufrechterhaltend entgegensteht.

Entsprechend eines weiteren Aspektes betrifft die vorliegende Erfindung einen Zaunaufsatz für einen netzartigen, elektrischen Wildschutz- und Weidezaun, insbesondere für einen Schwarzwildschutzzaun, mit Netzhaltern und vorzugsweise wenigstens einem Zaunlängselement, insbesondere einem Netzlängselement. Das Zaun- und/oder Netzlängselement kann weiter bevorzugt ein optisches Warnelement aufweisen und/oder ausbilden und/oder elektrifizlerbar ausgebildet sein.

Erfindungsgemäß zeichnet sich dieser Zaunaufsatz dadurch aus, dass ein Zaunpfosten-Verlängerungselement vorgesehen ist. Hierdurch kann, entsprechend obiger Darlegungen, in vorteilhafter Weise eine Erhöhung der Gesamthöhe eines betreffenden Wildschutz- und Weidezauns und damit eine vergleichsweise verbesserte Hütewirkung erzielt werden. In besonders vorteilhafter Weise kann dieses grundsätzlich vom primären Wildschutz- und Weidezaun separat ausgebildet und nur bedarfsweise auf diesem aufgesetzt bzw. angebracht werden. Durch den erfindungsgemäßen Zaunaufsatz ist ein baukastenartiger Aufbau eines Wildschutz- und Weidezauns im Sinne obiger Darlegungen möglich.

Ein Zaunpfostenverbindungselement des Zaunaufsatzes kann entweder zur Verbindung eines zum Grundzaun oder primären Wildschutz- und Weidezaun gehörigen Zaunpfostens mit einem diesen verlängernden, weiteren Zaunpfostenelement dienen und/oder selbst eine solche ausbilden, so dass wenigstens ein weiteres Zaunlängselement, vorzugsweise mehrere oberhalb, über dem Grundzaun angeordnet werden können. Sofern das Zaunlängselement mit vertikalen Querverbindern zusammenwirkt und/oder mit solchen verbunden ist und/oder werden kann, bildet es gleichzeitig ein Netzlängselement aus, wie oben bereits beschrieben. Dies ist insbesondere dann der Fall, wenn beispielsweise mehrere, im aufgestellten Zustand übereinander angeordnete Zaunlängselemente für den Zaunaufsatz vorgesehen sind. Diese können dann mittels entsprechender Querverbinder, wie oben bereits beschrieben, zu einem separaten, auf den Grundzaun aufzusetzenden Netz zusammengefasst und auf den Basis- bzw. Grundzaun aufgesetzt werden.

Bevorzugt weist wenigstens ein Zaun- insbesondere Netzlängselement ein optisches Warnelement auf und/oder bildet ein solches aus. In weiter bevorzugter Weise ist dieses Zaun- bzw. Netzlängselement auch elektrifizierbar ausgebildet.

### Ausführungsbeispiel

Nachfolgend wird unter Bezugnahme auf die beigefügten Figuren ein Ausführungsbeispiel näher erläutert.

Es zeigen
- Figur 1: rein beispielhaft und schematisch, einen Wildschutz- und Weidezaun 1, bestehend aus einem Zaunnetz 2 und Zaunpfosten 3,
- Figur 2a: einen gegenüber der Darstellung in der Figur 1 mit weiteren Merkmalen versehenen Zaun,
- Figur 2b: einen Zaunaufsatz für einen Zaun entsprechend der Figur 2a.

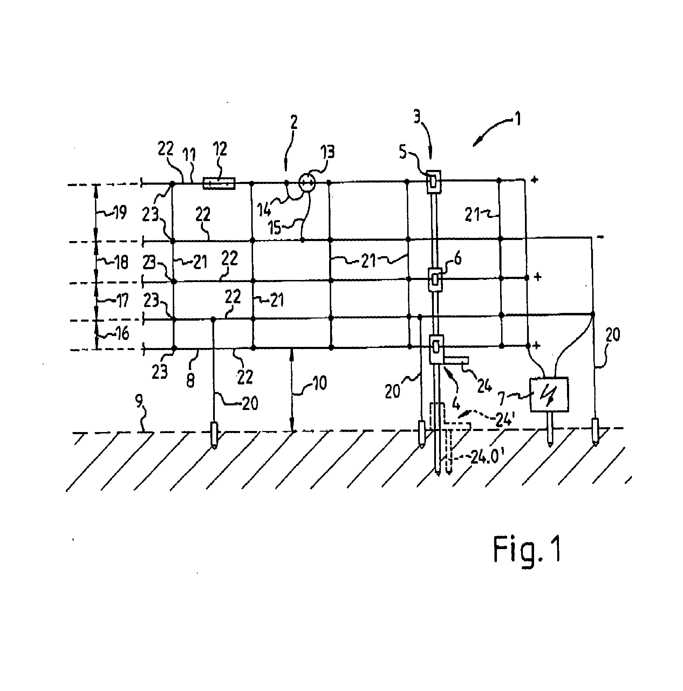

Das mittels eines Hütegerätes 7 elektrifizierte Zaunnetz 2 wird entsprechend der Darstellung in Figur 1 mittels Netzhalter 4 - 6 so am Zaunpfahl 3 befestigt und positioniert, dass zwischen der Zaununterkante 8 und dem Boden 9 ein Freihalteabstand 10 ausgebildet ist. Dieser Freihalteabstand 10 verhindert einerseits eine widerstandsverringerung im elektrischen Schaltkreis des Wildschutz- und Weidezauns durch seinen Abstand zu darunter liegendem Bewuchs, zumindest jedoch reduziert er ihn, und erleichtert andererseits das Freimähen des Zauns.

Als zusätzliche Hüte- und Schutzfunktion kann der Wildschutz-und Weidezaun vorzugsweise in seinem oberen Bereich ein optisches Warnelement aufweisen. Grundsätzlich können die optischen Warnelemente jedoch auch über die gesamte Netzhöhe angebracht sein, also oben, mittig, unten. In einer ersten Ausführungsform kann dies, wie hier rein beispielhaft und schematisch dargestellt, durch ein farbiges, insbesondere blaues Netzlängselement 11 realisiert sein. In einer bevorzugten Ausführungsform ist das optische Warnelernent als Reflektor ausgebildet, wozu das Netzlängselement beispielsweise bandförmig und aus reflektierendem Material ausgebildet sein kann. Möglich ist aber auch alternativ und/oder zusätzlich die Anordnung von Reflektoren 12 zur Realisierung solcher passiver Lichtquellen.

Ebenfalls beispielhaft und schematisch dargestellt ist eine weitere Ausführungsform eines solchen optischen Warnelementes in der Form einer aktiven Lichtquelle 13, die beispielsweise als LED, insbesondere als blaue LED ausgebildet sein kann. Über die beiden beispielhaften Elektroanschlüsse 14, 15 kann diese aktive Lichtquelle mit Energie versorgt zur weiter verbesserten Fernhaltung von Wild oder Nutztier, insbesondere von Schwarzwild, betrieben werden.

Zwischen den einzelnen, übereinander angeordneten, wenigstens zum Teil elektrifizierten Netzlängselementen können wenigstens teilweise verschiedene Abstände 16 bis 19 ausgebildet sein. Zum besseren Durchbruchschutz können diese Abstände im unteren Netzbereich kleiner und nach oben hin größer werdend realisiert werden.

In der beispielhaft und schematisch dargestellten Ausführungsform sind die einzelnen, benachbarten Netzlängselemente mit wechselnden Polaritäten, +, -, +, ..., beaufschlagt. Hierbei ist der unterste elektrische Leiter mit vom geerdeten Boden verschiedener Polarität beaufschlagt, so dass bei Berührung der Zaununterkante ein Hüteimpuls ausgelöst wird.

Um über die gesamte Zaunlänge eine ausreichende Erdung des Bodens zu erreichen, können entlang des Zauns mehrere Erdungselemente 20 vorgesehen sein, die vorzugsweise den betreffenden Pol von einem entsprechend gepolten Netzlängselement über eine elektrisch leitende Verbindung mit der Erde 9 verbinden. Hierdurch können weitere Leitungselemente entfallen, insbesondere solche, die gegebenenfalls einwachsen könnten.

Um die einzelnen, unterschiedlich gepolten Netzlängselemente 22 in ihrem jeweiligen Abstand zueinander stabil halten zu können, sind voneinander beabstandet in Längsrichtung des Zauns verlaufend angeordnete Querverbinder vorgesehen. Diese sind vorzugsweise aus nicht leitendem Material und vergleichsweise steif ausgebildet, so dass bei einem Druck auf eines der Netzlängselemente alle übrigen Netzlängselemente ebenfalls in die gleiche Richtung bewegt werden, bzw. die ihnen aufgrund ihrer Spannung inne wohnenden Rückstellkräfte summarisch insgesamt einer Zaunverbiegung und im speziellen auch einer Reduzierung der Abstände zwischen den Netzlängselementen entgegen wirken.

Die vorzugsweise aus PE geformten Querverbinder 21 können beispielsweise als steifer Faden, als steife Schnur oder dergleichen ausgebildet und über beispielsweise durch Spritzguss realisierte Verbindungspunkte 23 mit den Netzlängselementen 22 verbunden sein.

Zur leichteren Montage der vorzugsweise aus Glasfaser, insbesondere aus Fiberglas hergestellten Zaunpfosten 3 können diese mit einem Zaunpfosten-Setzhilfeelement 24, zum Beispiel in der Form eines so genannten "Tritt", versehen sein. Ein Setzhilfeelement (Tritt) kann weiter vorteilhaft im aufgebauten Zustand auch zur Stabilisierung des Netzes am Boden dienen. Der Tritt kann auch als Abstandselement zum untersten Netzlängselement dienen. Der Tritt kann als Einzeltritt oder Doppeltritt ausgeführt werden insbesondere für Ausführungsformen mit Einzelspitze oder Doppelspitze.

In besonders bevorzugter Weise kann dieser Tritt in einen Netzhalter 4 integriert oder zusammen mit ihm ausgebildet sein oder selbst einen solchen aufweisen, so dass lediglich ein einziges Element für beide Funktionen am Zaunpfahl erforderlich ist. In besonders bevorzugter Weise ist zumindest der unterste Netzhalter 4 positionsvariabel, insbesondere verschiebbar ausgebildet. Dadurch können auch nachträglich Änderungen am Freihalteabstand 10 vorgenommen werden, zum Beispiel um die Zaununterkante bei zunehmendem Bewuchs oder zu Mähzwecken höher zu setzen, gegebenenfalls auch nur temporär. Oder, bei gewünschter Reduzierung des Freihalteabstands, um die Zaununterkante nach unten zu verschieben.

Zur Erhöhung der Stabilität des Zaunpfostens 3 und somit des gesamten Zauns kann eine Zaunpfosten-Setzhilfe 24', wie beispielhaft gestrichelt dargestellt, auch auf Zaunpfostensetzhöhe angeordnet und mit einer ebenfalls in den Erdboden einzudrückenden Spitze 24.0' versehen sein. Sofern nur ein solches Zaunpfosten-Setzelement vorgesehen ist, und dieses in beschriebener Weise am Boden angeordnet ist, kann das darüber liegend dargestellte Zaunpfosten-Setzhilfeelement 24 lediglich als Netzhalter ausgebildet werden, insbesondere in seiner Position bezüglich des Zaunpfostens veränderbar.

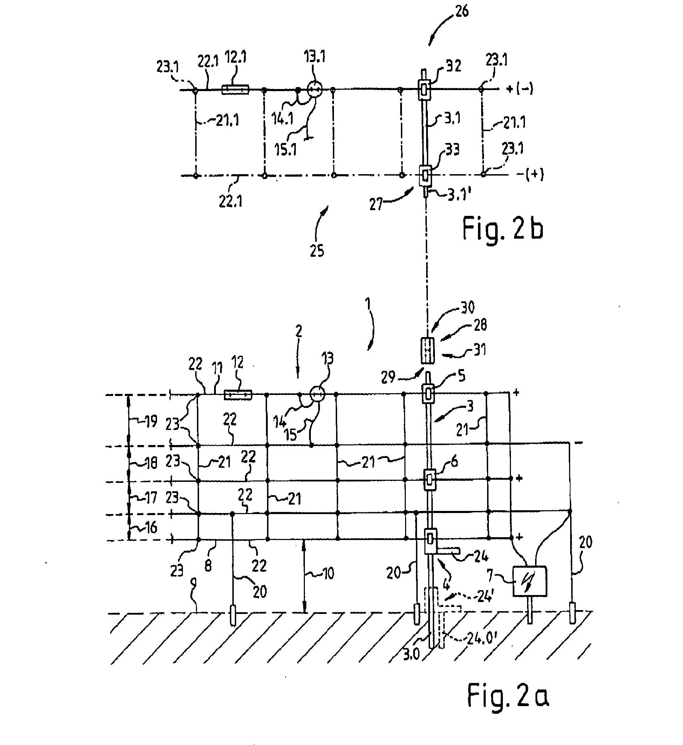

Die Figur 2a zeigt den Zaun entsprechend der Darstellung in Figur 1. Ergänzend wurde der Zaunpfahl 3 in vom oberen Netzhalter 5 nach oben vorstehender Weise dargestellt. Hieran kann beispielsweise ein Zaunpfosten-Aufsatzelement 28 aufgesetzt werden, um eine von mehreren möglichen Verbindungsarten für einen entsprechend der Figur 2b dargestellten Zaunaufsatz 25 zur Verfügung zu stellen. Das hier beispielhaft dargestellte Zaunpfosten-Aufsatzelement 28 ist hülsenförmig ausgebildet und kann mit seiner unteren Aufnahme 29 auf das obere Ende des Zaunpfostens 3 aufgesteckt werden. Eine Positionier- oder Setzhilfe 31 kann beispielsweise in der Form einer Querschnittsverjüngung im Hülseninneren ausgebildet sein und einerseits als Anschlag für die Hülse auf dem Zaunpfosten 3 dienen und andererseits die Einstecktiefe der oberen Aufnahme 30 für die Aufnahme des darin einzusteckenden, zusätzlichen Zaunpfahlelementes 3.1 begrenzen.

Der Zaunaufsatz 25 umfasst im Weiteren wenigstens ein Zaunlängselement 22.1, welches bevorzugt ebenfalls ein optisches Warnelement 12.1, 13.1 aufweist und/oder ausbildet und in weiter bevorzugter Weise auch elektrifizierbar ausgebildet ist. In einer weiter bevorzugten Ausführungsform ist wenigstens ein weiteres Zaunlängselement 22.1 vorgesehen und insbesondere bevorzugt mittels vertikaler Querverbinder 21.1 mit ersterem Zaunlängselement 22.1 zu einer Netzform verbunden. Zur Fixierung der beiden Zaunlängselemente 22.1, welche durch die Verbindung mit den vertikalen Querbindern 22.1 eine Netzform ausbilden und daher auch als Netzlängselemente bezeichnet werden können, sind dementsprechend als Netzhalter 32, 33 benannte Fixierungen am Zaunpfosten 3.1 vorgesehen. Diese sind insbesondere vorteilhaft ebenfalls in ihren Positionen gegenüber dem Zaunpfahl 3.1 verstellbar ausgebildet.

Dementsprechend kann der Zaunpfahl 3.1, wie in der Position 3.1' gestrichelt dargestellt, unterhalb des Netzhalters 33 herausgeschoben werden, z.B. um in die Aufnahme 30 des Zaunpfosten-Aufsatzelementes 28 zur Erhöhung des Grundzaunes 1 eingesteckt werden.

Die Elektrifizierung der zusätzlichen Zaunlängselemente 22.1 kann bei Vorsehen lediglich eines einzigen solchen entweder die gleiche Polarität aufweisen, wie das obere Netzelement des Grundzauns, so dass zum Beispiel durch eine Berührung ein Hüteschock gegenüber dem Erdboden bewirkt wird. In einer davon abgewandelten Ausführungsform kann aber auch die komplementäre Polarität beaufschlagt werden, so dass ein Hüteschock zwischen dem obersten und dem darunter liegenden, in dem Fall die komplementäre Polung aufweisenden Netzlängselement ausgelöst werden kann.

Bei mehreren zusätzlichen Zaunlängeelementen 22.1 kann je nach gewünschtem Anwendungsfall eine wechselnde Polarität zwischen den einzelnen Netzlängselementen vorgesehen sein, wie sinngemäß zum Grundzaun oben bereits in der Figur 1 beschrieben. Möglich wäre aber auch jede andere Polung, wie z.B. alle +, alle - oder auch davon abweichende Polwechsel, bei entsprechend vorgesehener Anzahl von Zaunlängselementen 22.1.

### Bezugszeichenliste:

- 1: Wildschutz- und Weidezaun
- 2: Netz
- 3: Zaunpfosten
- 4: Netzhalter
- 5: Netzhalter
- 6: Netzhalter
- 7: Hütegerät
- 8: Zaununterkante
- 9: Boden
- 10: Freihalteabstand
- 11: optisches Warnelement
- 12: optisches Warnelement
- 13: optisches Warnelement
- 14: elektrischer Anschluss
- 15: elektrischer Anschluss
- 16: Abstand
- 17: Abstand
- 18: Abstand
- 19: Abstand
- 20: Erdung
- 21: Querverbinder
- 22: Netzlängselement
- 23: Verbindungspunkt
- 24: Zaunpfosten-Setzhilfeelement
- 25: Zaunaufsatz
- 26: Zaunpfostenverlängerungselement
- 27: Zaunpfostenverbindungselement
- 28: Zaunpfosten-Aufsatzelement
- 29: Aufnahme
- 30: Aufnahme
- 31: Positionierhilfe

## Patentansprüche

1. Wildschutz- und Weidezaun, netzartig und elektrifiziert, insbesondere Schwarzwild-Schutzzaun, **dadurch gekennzeichnet, dass** ein Freihalteabstand zwischen der Zaununterkante und einer dem Boden entsprechenden Bezugslinie vorgesehen ist.

2. Wildschutz- und Weidezaun, elektrifiziert und netzartig, insbesondere Schwarzwild-Schutzzaun, **dadurch gekennzeichnet, dass** der Zaun ein optisches Warnelement aufweist, vorzugsweise in seinem oberen Bereich.

3. Wildschutz- und Weidezaun, netzartig und elektrifiziert, insbesondere Schwarzwild-Schutzzaun, **dadurch gekennzeichnet, dass** ein Zaunpfosten-Aufsatzelement (28) vorgesehen ist.

4. Wildschutz- und Weidezaun nach einem der vorangehenden Ansprüche, **dadurch gekennzeichnet, dass** das Zaunnetz mehrere, übereinander angeordnete, wenigstens zum Teil mit elektrischen Leitern versehene und/oder elektrische Leiter ausbildende Netzlängselemente aufweist.

5. Wildschutz- und Weidezaun nach einem der vorangehenden Ansprüche, **dadurch gekennzeichnet, dass** benachbarte elektrische Leiter jeweils mit komplementärer Polarität (+, -, +, ...) beaufschlagbar sind.

6. Wildschutz- und Weidezaun nach einem der vorangehenden Ansprüche, **dadurch gekennzeichnet, dass** das Zaunnetz zwischen den Netzlängselementen Druck übertragende Querverbinder aufweist.

7. Wildschutz- und Weidezaun nach einem der vorangehenden Ansprüche, **dadurch gekennzeichnet, dass** das optische Warnelement als wenigstens zum Teil farbiges, insbesondere blaues Netzlängselement und/oder ein auf einem Netzlängselement aufgebrachtes farbiges, insbesondere blaues Signalelement ausgebildet ist.

8. Wildschutz- und Weidezaun nach einem der vorangehenden Ansprüche, **dadurch gekennzeichnet, dass** das optische Warnelement als passive Lichtquelle, wie z. B. ein Reflektor, insbesondere mit blauer Farbgebung, ausgebildet ist.

9. Wildschutz- und Weidezaun nach einem der vorangehenden Ansprüche, **dadurch gekennzeichnet, dass** das optische Warnelement als aktive Lichtquelle, insbesondere mit blauer Farbgebung, ausgebildet ist.

10. Zaunpfosten für einen netzartigen, elektrifizierten Wildschutz- und Weidezaun, insbesondere Schwarzwild-Schutzzaun, mit Netzhaltern, **dadurch gekennzeichnet, dass** ein Freihalteabstand zwischen der Position des untersten Netzhalters und einem in aufgestellten Zustand dem Boden entsprechenden Bezugspunkt am Zaunpfosten vorgesehen ist.

11. Zaunpfosten für einen netzartigen, elektrifizierten Wildschutz- und Weidezaun, insbesondere Schwarzwild-Schutzzaun, mit Netzhaltern, **dadurch gekennzeichnet, dass** ein Zaunpfosten-Aufsatzelement (28) vorgesehen ist.

12. Zaunpfosten nach Anspruch 22 oder 23, **dadurch gekennzeichnet, dass** wenigstens der unterste Netzhalter in seiner Position am Zaunpfosten veränderbar, insbesondere verschiebbar angeordnet ist.

13. Zaunpfosten nach Anspruch 22, 23 oder 24, **dadurch gekennzeichnet, dass** ein unterer Netzhalter an einem Zaunpfosten-Setzhilfeelement montiert und/oder ausgebildet ist.

14. Zaunaufsatz für einen netzartigen, elektrifizierten Wildschutz- und Weidezaun, insbesondere Schwarzwil-Schutzzaun, mit Netzhaltern, **dadurch gekennzeichnet, dass** ein Zaunpfosten-Verlängerungselement (26) vorgesehen ist.

15. Zaunaufsatz nach Anspruch 27, **dadurch gekennzeichnet, dass** ein Zaunpfostenverbindungselement (27) vorgesehen ist.
